# EUROPÄISCHE PATENTSCHRIFT

(11) **EP 2 646 664 B1**
(45) Veröffentlichungstag und Bekanntmachung des Hinweises auf die Patenterteilung: **17.05.2017**
(21) Anmeldenummer: 11771177.0
(22) Anmeldetag: 21.10.2011
(51) Int. Cl.: F01N 3/20

(54) **VORRICHTUNG ZUR VERSORGUNG EINES ABGASNACHBEHANDLUNGSSYSTEMS MIT EINEM REDUKTIONSMITTEL**
DEVICE FOR SUPPLYING A REDUCING AGENT TO AN EXHAUST-GAS AFTERTREATMENT SYSTEM
DISPOSITIF D'ALIMENTATION D'UN SYSTÈME DE RETRAITEMENT DU GAZ D'ÉCHAPPEMENT EN UN AGENT DE RÉDUCTION

(30) Priorität: 02.12.2010 DE 102010062333
(43) Veröffentlichungstag der Anmeldung: 09.10.2013
(73) Patentinhaber: Robert Bosch GmbH, 70442 Stuttgart (DE)
(72) Erfinder: GOTTWALD, Frank, 71287 Weissach (DE)
(86) Internationale Anmeldenummer: PCT/EP2011/068386
(87) Internationale Veröffentlichungsnummer: WO 2012/072334

(56) Entgegenhaltungen:
- WO-A1-2010/078989
- WO-A1-2011/086038
- FR-A1- 2 916 476
- US-A1- 2007 163 245

## Beschreibung

### Stand der Technik

Bei Kraftfahrzeugen mit Verbrennungsmotoren, insbesondere Dieselmotoren, müssen aufgrund der sich ständig verschärfenden gesetzlichen Abgasgrenzwerte unter anderem Luftschadstoffe, wie zum Beispiel Stickoxide (NOx), im Abgasstrom weiter reduziert werden. Ein verbreitetes Verfahren das hierbei zur Anwendung kommt, ist die katalytische Reduktion, das heißt das s.g. SCR-Verfahren ("Selective Catalytic Reduction"). Hierbei wird während des Betriebs eines Verbrennungsmotors, insbesondere eines Dieselmotors, ein flüssiges Reduktionsmittel mithilfe einer Pumpe aus einem Vorratsbehälter zu einem Dosiermodul mit einer Einspritzdüse im Bereich eines Katalysators am Abgasrohr gefördert. Als Reduktionsmittel kommt im Allgemeinen eine etwa 32,5%-ige Harnstoff-Wasserlösung zum Einsatz die unter dem Markennamen "AdBlue^{®}" vom Handel vertrieben wird. Zu berücksichtigen ist in diesem Zusammenhang, dass diese Harnstoff-Wasserlösung bei einer Temperatur unterhalb von -11 °C gefriert und sich oberhalb von 60 °C thermisch zersetzt, so dass insbesondere für den Winterbetrieb bei tiefen Temperaturen Heizeinrichtungen vorgesehen werden müssen, um die notwendige Eisdruckfestigkeit gewährleisten zu können.

Aus dem Stand der Technik ist eine Vielzahl von Vorrichtungen zur Bevorratung der für das SCR-Verfahren bei Dieselmotoren notwendigen Harnstoff-Wasserlösung und zur Versorgung der Abgasnachbehandlungssysteme mit diesem Reduktionsmittel bekannt. Aus der DE 10 2008 041 723 A1 ist ein Tank zur Bevorratung eines flüssigen Wirkstoffes bekannt. Ein Ende einer flexiblen Sauglanze ist in der Nähe des Tankbodens von einer Heizung umgeben, wobei die Saugleitung zusätzlich innen und/oder außen Heizdrähte aufweist. Die gesamte Anordnung befindet sich in einem Schwapptopf, um ein lageunabhängiges Ansaugen des Reduktionsmittels zu ermöglichen. Seitlich am Schwapptopf befindet sich ein Füllstandsmesser. Der Schwapptopf sowie der Füllstandsmesser sind innerhalb eines Tanks angeordnet. Eine elektrische Anschlussleitung des Füllstandsmessers sowie die Saugleitung sind mit einem Gewebeschlauch als Schutz gegen mechanischen Abrieb versehen. Da der Füllstandsmesser über keine direkte Heizeinrichtung verfügt, kann dessen Einfrieren, insbesondere bei langanhaltenden Frosttemperaturen, nicht ausgeschlossen werden. Die DE 10 2008 041 805 A1 offenbart eine weitere Tankanordnung. Die Eisdruckfestigkeit wird bei diesem Tank durch ein unterhalb des Tankdeckels befindliches Luftpolster bewirkt, das sich auch bei maximaler Befüllung einstellt. Zur Erzeugung des Luftpolsters ist beispielsweise eine quaderförmige oder eine hohlzylindrische Raumbegrenzung unterhalb des Tankdeckels vorgesehen, die zum Tankboden hin offen ist. Beim Befüllen des Tanks bildet sich somit in der Raumbegrenzung ein Luftpolster aus, da die Luft nicht seitlich aus der Raumbegrenzung entweichen kann. Beim Gefrieren des Tankinhaltes wird dieses Luftpolster komprimiert, wodurch eine Beschädigung des Tanks verhindert wird. Bei extremen Schräglagen des Tanks kann jedoch die Eisdruckfestigkeit nicht gewährleistet werden, da das Luftpolster zumindest teilweise aus der Raumbegrenzung entweichen kann.

Die DE 10 2007 059 853 A1 betrifft eine Vorrichtung zur Messung eines Füllstandes einer Flüssigkeit in einem Behälter. Zur Füllstandsmessung ist ein Ultraschallwandler im Bereich des Tankbodens angeordnet, dessen Ultraschallstrahl parallel zum Tankboden verläuft. Mithilfe eines tankbodenseitigen Umlenkelementes wird der Ultraschallstrahl um 90° abgelenkt und von unten durch ein Messrohr gegen den Flüssigkeitsspiegel gelenkt, von dort zurückreflektiert und vom Umlenkelement wieder zurück zum Ultraschallwandler geleitet. Mithilfe einer dem Ultraschallwandler nachgeschalteten Auswertungselektronik kann die Höhe des Flüssigkeitsspiegels im Tank aus dem reflektierten Ultraschallsignal ermittelt werden. Diese Vorrichtung zur Messung eines Behälterpegelstandes erfordert jedoch einen recht hohen technischen Aufwand.

Aus der DE 10 2007 028 147 A1 ist ferner eine Vorrichtung zur Erfassung der Füllstandshöhe einer Flüssigkeit in einem Behälter bekannt, die mit einem Drucksensor realisiert ist. Der Drucksensor ist im Bereich des Behälterbodens angeordnet und von einem zylindrischen Gehäuse umgeben, dessen Höhe ungefähr dem maximalen Füllstand entspricht. Das Gehäuse ist mit einer Vielzahl von kleinen Ausgleichsöffnungen durchsetzt, die auf die hindurchströmende Flüssigkeit drosselnd wirken, so dass auf den Sensor im Wesentlichen nur der hydrostatische Druck der Flüssigkeit wirkt. Hierdurch weist das Ausgangssignal des Sensors eine hohe zeitliche Konstanz auf. Ein zu starkes Kippen des Behälters oder das zumindest bereichsweises Einfrieren der Flüssigkeit können jedoch das Messergebnis unter Umständen beeinflussen.

Die FR 2 916 476 A1 betrifft ein Verfahren zum Auftauen eines Additivs zur Behandlung der Abgase eines Verbrennungsmotors eines Fahrzeugs und eine Vorrichtung zur Durchführung des Verfahrens. Die Vorrichtung umfasst einen Vorratsbehälter, einen Sumpf, eine Ansaugleitung und eine Steuereinheit, wobei der Vorratsbehälter und der Sumpf durch eine Wärmeaustauscheinrichtung umgeben werden. In dem Vorratsbehälter und dem Sumpf befinden sich jeweils ein Heizelement und ein Thermosensor. Zum Auftauen des Additivs wird zunächst die Wärmeenergie des Abgases durch die Wärmeaustauscheinrichtung zu dem Vorratsbehälter und dem Sumpf übertragen, hierbei wird die Temperatur des Additivs durch die Thermosensoren erfasst und zu der Steuereinheit weitergeleitet. Wenn die Wärmeenergie des Abgases allein nicht ausreichend ist, um das Additiv aufzutauen, wird die Steuereinheit die Heizelemente in dem Vorratsbehälter und dem Sumpf einschalten.

Die US 2007/163245 A1 offenbart ein System zur Nachfüllung und Förderung des Reagenzes für ein SCR-Abgasnachbehandlungssystem. Dieses System besteht aus einer Reagenz-Zufuhrkanne, einem Reagenz-Haltetank, einer Regler und einem optischen Anzeiger, wobei der Reagenz-Haltetank einen Sumpf, eine elektrisch betriebene Heizung, eine Saugleitung sowie Niveausensoren umfasst.

Aus der WO 2010/078989 A1 ist ein Vorratstank eines Dosiersystems zum Einbringen eines Reduktionsmittels in einen Abgastrakt einer Brennkraftmaschine bekannt. Der Vorratstank umfasst mindestens eine Öffnung zur Montage von Einbauten sowie Öffnungen zum Befüllen und Entleeren sowie Be-/Entlüftung. Um einen Einsatz eines Dosiersystems zur Eindosierung von Harnstoff bzw. einer wässrigen Harnstoffwasser-Lösung zur Reduktion von Stickoxiden im Abgas einer Verbrennungskraftmaschine zu erreichen, und dessen Funktionieren auch bei tiefen Temperaturen zu gewährleisten, ist der Tank zur Bevorratung des Reduktionsmittels mit einer Heizung, insbesondere einer elektrisch betätigten Heizung ausgestattet.

Aufgabe der Erfindung ist es daher, eine Vorrichtung zur zuverlässigen Versorgung eines Abgasnachbehandlungssystems eines Dieselmotors mit einem Reduktionsmittel zu schaffen, die unter allen üblicherweise in Kraftfahrzeugen auftretenden Umgebungsbedingungen und Betriebszuständen eine zuverlässige Abgabe des Reduktionsmittels an das Abgasnachbehandlungssystem gewährleistet, die zugleich eine genaue Erfassung und Überwachung des Reduktionsmittelpegels erlaubt, die einen einfachen Aufbau aufweist, und die aufgrund geringen Platzbedarfs bzw. einer kompakten Bauweise leicht in ein Kraftfahrzeug integrierbar ist.

### Offenbarung der Erfindung

Es wird eine Vorrichtung zur Versorgung eines Abgasnachbehandlungssystems mit einem Reduktionsmittel, insbesondere mit einer Harnstoff-Wasserlösung zur Reduktion von Stickoxiden im Abgasstrom eines Dieselmotors, offenbart, die einen Tank für das Reduktionsmittel und ein Fördermodul zum Herausfördern des Reduktionsmittels aus dem Tank über eine, insbesondere elektrisch beheizbare, Ansaugleitung, welche außerhalb des Tanks verläuft und an einen im Bereich eines Tankbodens befindlichen Pumpensumpf angeschlossen ist, wobei im Bereich des Pumpensumpfes eine, insbesondere elektrisch betriebene, Pumpensumpfheizung angeordnet ist, aufweist.

Erfindungsgemäß
a) reicht mindestens ein, insbesondere elektrisch betriebener, Heizstab in den Tank hinein, wobei der Heizstab sich zwischen der oberseitig am Tank befindlichen Tankbelüftung und dem Pumpensumpf erstreckt und
b) verläuft mindestens ein Füllstandmesser außerhalb des Tanks zwischen der Oberseite des Tanks und dem Pumpensumpf, wobei der Pegel des Reduktionsmittels im Füllstandmesser aufgrund des Prinzips der kommunizierenden Röhren stets mit der Füllhöhe des Reduktionsmittels im Tank korrespondiert.

Hierdurch wird, insbesondere bei Umgebungstemperaturen unterhalb von -11 °C, ein ausfallsicherer Betrieb der Vorrichtung erreicht, so dass die Versorgung eines nachgeschalteten Abgasnachbehandlungssystems mit dem Reduktionsmittel auch bei derart niedrigen Umgebungstemperaturen gesichert ist. Darüber hinaus ermöglicht die erfindungsgemäße Vorrichtung eine weitgehend lageunabhängige Versorgung des Abgasreinigungssystems mit dem Reinigungsmittel bzw. dem AdBlue^{®}.

Infolge des unterseitig an den Tankboden angesetzten Pumpensumpfes, der nicht integral zum Tank ausgeführt ist, steht unabhängig von der Lage der Vorrichtung im Raum stets eine ausreichende Menge des Reduktionsmittels im Bereich der Ansaugleitung an, wodurch ein weitgehend lageunabhängiges und gleichmäßiges Ansaugen des Reduktionsmittels mithilfe des Fördermoduls möglich ist. Dies ermöglicht die nahezu lageunabhängige und temperaturabhängige Versorgung eines nachfolgenden Abgasnachbehandlungssystems mit dem Reduktionsmittel, das zur ordnungsgemäßen Durchführung der katalytischen Abgasreinigung im Zuge des SCR-Prozesses notwendig ist. Bei dem Fördermodul handelt es sich um eine herkömmliche Pumpe, wie zum Beispiel eine Membranpumpe, eine Zahnradpumpe, eine Kreiselpumpe, eine Schlauchpumpe, eine Kolbenpumpe oder dergleichen, die erforderlichenfalls mit einer bevorzugt elektrisch betriebenen Heizeinrichtung gegen Vereisung geschützt ist.

Mittels der bevorzugt elektrisch betriebenen Pumpensumpfheizung lässt sich ein Bereich bzw. eine Kavität oberhalb des Pumpensumpfes eisfrei halten, so dass auch bei langanhaltenden tiefen Temperaturen ein sicheres Ansaugen des Reduktionsmittels durch das Fördermodul möglich ist. Die Pumpensumpfheizung ist mit eisdruckfesten Haltern bzw. einer geeigneten Halterung oberhalb des Pumpensumpfes befestigt. Der Pumpensumpf verfügt über eine näherungsweise topfförmige oder eine in etwa kegelstumpfförmige, innen hohle geometrische Formgebung mit einer geneigten, umlaufenden Seitenwand.

Der Tank kann auch eine von einfachen geometrischen Raumformen abweichende, komplexe räumliche Gestalt aufweisen (s.g. Freiformtank). Hierdurch kann die Vorrichtung auch in Kraftfahrzeuge mit beengten konstruktiv vorgegebenen Platzverhältnissen eingebaut werden. Der Pumpensumpf bzw. die Ansaugstelle sind bevorzugt am tiefsten Punkt des Tanks lokalisiert. Um die Vereisung der Ansaugleitung zu verhindern, ist diese eisdruckfest gestaltet und ebenfalls mit einer geeigneten, bevorzugt elektrisch betriebenen elektrischen Heizeinrichtung ausgestattet. Darüber hinaus verläuft die Ansaugleitung ausgehend vom Pumpensumpf bis zum Fördermodul außerhalb des Tanks. Dadurch kommt diese nicht mit dem unter Umständen zu einem massiven Block gefrierenden Reduktionsmittel in Kontakt, sodass zum Freihalten der Ansaugleitung nur eine vergleichsweise geringe elektrische Heizleistung notwendig ist.

Der im Regelfall gleichfalls elektrisch betriebene Heizstab erstreckt sich vorzugsweise über die volle Höhe des Tanks, um bei zumindest teilweise vereistem Tankinhalt einen Entlüftungskanal zwischen der oberseitig am Tank befindlichen Tankbelüftung und dem Pumpensumpf bzw. der Ansaugstelle zu schaffen und diesen frei zu halten. Der Entlüftungskanal verläuft zwischen einer oberseitigen Tankbelüftung entlang des Heizstabes durch das gefrorene Reduktionsmittel hindurch bis zu der Kavität im Bereich des Pumpensumpfes. Hierdurch ist ein einwandfreies Ansaugen des Reduktionsmittels durch das Fördermodul auch im Fall eines zumindest teilweise vereisten Tankinhaltes gewährleistet. Der Heizstab ist bevorzugt auf der Pumpensumpfheizung befestigt.

Der Füllstand des Reduktionsmittels im Tank wird kontinuierlich mittels eines eisdruckfesten, schlauchförmigen Füllstandsmessers erfasst, der außenliegend am Tank entlang verläuft bzw. angeordnet ist. Der Pegel des Reduktionsmittels im Füllstandsmesser korrespondiert hierbei aufgrund des Prinzips der kommunizierenden Röhren stets mit der Füllhöhe des Reduktionsmittels im Tank.

Der Pumpensumpf überdeckt eine Tanköffnung im Bereich des Tankbodens und der Tank verfügt über mindestens eine Tankbelüftung.

Hierdurch entsteht ein stets mit Reduktionsmittel gefüllter Raum, dessen Reduktionsmittelreservoir gegen Schwappbewegungen im Tank weitgehend unempfindlich ist, so dass im Bereich des Pumpensumpfes immer genügend Reduktionsmittel zum gleichmäßigen Ansaugen ansteht. Im Ergebnis ist ein Durchmesser des Pumpensumpfes deutlich größer als ein Innendurchmesser der im Tankboden angeordneten Tanköffnung. Der unterseitig an den Tank angesetzte Pumpensumpf wird bevorzugt durch Verschweißen befestigt. Alternativ sind andere Befestigungstechnologien, wie zum Beispiel Kleben, Verklemmen, Verpressen oder Verschrauben, zur Befestigung des Pumpensumpfes am Tank anwendbar. Um das Ansetzen des Pumpensumpfes an die Tanköffnung zu erleichtern, ist an dieser ein umlaufender Flansch mit einer näherungsweise rechteckförmigen Querschnittsgeometrie ausgebildet. Der Flansch kann in Abhängigkeit von der gewählten Befestigungsart mit Dichtmitteln und/oder mit Gewinde versehen sein. Die Tankbelüftung ermöglicht das ungehinderte Herausfördern des Reduktionsmittels, weil die Entstehung eines Unterdruckes im Tank verhindert wird.

In einer weiteren vorteilhaften Ausgestaltung der Vorrichtung ist vorgesehen, mindestens ein Ausgleichselement im Bereich des Pumpensumpfes zu positionieren. Hierdurch wird die Eisdruckfestigkeit der Vorrichtung weiter optimiert. Das Ausgleichselement ist bevorzugt ringförmig ausgestaltet und in den Pumpensumpf eingelegt bzw. anderweitig, zum Beispiel durch Einklemmen, Einkleben oder Einlegen, darin befestigt. Hierdurch wird die notwendige Eisdruckfestigkeit im Bereich des Pumpensumpfes sichergestellt. Das Ausgleichselement ist bevorzugt mit einem hinreichend kompressiblen und chemisch resistenten Kunststoffmaterial, wie zum Beispiel EPDM-Kautschuk (="Ethylen-Propylen-Dien-Monomer") hergestellt.

Bei einer Weiterbildung ist vorgesehen, dass im Bereich des Pumpensumpfes mindestens ein Filterelement angeordnet ist.

Infolge dieses Filterelementes wird ein Ansaugen von etwaig im Reduktionsmittel enthaltenen Fremd- bzw. von Schmutzpartikeln und damit einhergehend das Verstopfen bzw. ein Blockieren des Fördermoduls bzw. ein Ausfall des ganzen Abgasnachbehandlungssystems vermieden. Das Filterelement kann als ein s.g. 3D-Filter ausgeführt sein.

Bei einer weiteren vorteilhaften Fortbildung ist der Füllstandsmesser mit mindestens zwei Widerstandsdrähten gebildet, die mit einem Kunststoffmantel versehen sind und die mit dem Reduktionsmittel in elektrisch leitenden Kontakt treten können.

Die bevorzugt zwei Widerstandsdrähte sind mit einer Metalllegierung hergestellt, die über eine hinreichende chemische Resistenz gegenüber dem Reduktionsmittel bzw. dem AdBlue^{®} verfügt. Die vorzugsweise spiralförmig gewendelten Widerstandsdrähte sind nur teilweise in den elektrisch isolierenden Kunststoffmantel des Füllstandsmessers eingebettet. Dies bedeutet, dass Widerstandsdrähte mit einer beispielsweise kreisförmigen Querschnittsgeometrie nur etwa hälftig in den die Außenhülle des Füllstandsmessers bildenden Kunststoffmantel eingelassen sind. Die Widerstandsdrähte verlaufen hierbei innenseitig im Kunststoffmantel des Füllstandsmessers. Hierdurch wird einerseits die notwendige Dichtigkeit gegenüber dem im Füllstandsmesser auf- und absteigenden Reduktionsmittel hergestellt und andererseits der für die Füllstandsmessung notwendige elektrische Kontakt zwischen den Widerstandsdrähten und dem Reduktionsmittel ermöglicht. Der durchgehend ausgebildete Kunststoffmantel mit einer Wandstärke von bevorzugt 1 mm bis 5 mm verleiht dem Füllstandsmesser darüber hinaus die erforderliche mechanische Eigenstabilität und stellt zugleich die notwendige elektrische Isolierung zwischen den Widerstandsdrähten dar. Der Füllstandsmesser hat somit im Ergebnis näherungsweise die Gestalt eines konventionellen Spiralschlauches mit einer im Schlauchinneren teilweise freiliegenden "Spiralverstärkung". Jede Spirale aus dem Widerstandsdraht stellt eine kettenartige Reihenschaltung einer Vielzahl elektrischer Widerstände dar, die bis zur Füllhöhe von dem elektrisch leitfähigen Reduktionsmittel kurzgeschlossen sind. Demzufolge ist ein zwischen den beiden spiralförmigen Widerstandsdrähten messbarer ohmscher Widerstand proportional zur Füllhöhe des Reduktionsmittels. Alternativ können die Widerstandsdrähte auch geradlinig verlaufen. Anstelle von Widerstandsdrähten können Metalldrähte mit beliebiger Legierungszusammensetzung zum Einsatz kommen, die jedoch gegenüber dem Reduktionsmittel chemisch beständig sein müssen.

Eine weitere Fortbildung der Vorrichtung sieht vor, dass mindestens zwei Kabel, insbesondere zur Versorgung der elektrisch beheizbaren Ansaugleitung, der Pumpensumpfheizung und des Heizstabes, im Wesentlichen entlang der Ansaugleitung verlaufen.

Hierdurch wird die elektrische Verkabelung der Vorrichtung vereinfacht. Die elektrischen Versorgungsleitungen bzw. die Kabel können innerhalb oder außerhalb der Ansaugleitung verlaufen. Es kann eine abschnittsweise Umhüllung, zum Beispiel eine Kabelspirale bzw. ein Spiralschlauch vorgesehen sein, um die Kabel und die Ansaugleitung zu einem strangförmigen Gebilde zusammen zu fassen.

Eine weitere vorteilhafte Ausgestaltung der Vorrichtung sieht vor, dass der Füllstandsmesser und die Ansaugleitung sowie die mindestens zwei Kabel zumindest abschnittsweise von einem thermischen Isoliermantel umgeben sind.

Der thermische Isoliermantel verringert zunächst den zur elektrischen Beheizung der genannten Komponenten notwendigen Energieeinsatz, da die Wärmeverluste verringert werden. Zum anderen bündelt bzw. fasst der thermische Isoliermantel die genannten Komponenten zu einem Strang zusammen, wodurch sich insbesondere die Montage vereinfacht. Die elektrischen Kabel und die Ansaugleitung können zur Vereinfachung der Montage innerhalb des Isoliermantels zumindest abschnittsweise mit einer Umhüllung versehen sein. Der thermische Isoliermantel kann mit beliebigen, gut wärmeisolierenden Materialien, wie zum Beispiel geschlossenzelligen Kunststoffschäumen oder dergleichen gebildet sein.
Bei einer alternativen Ausführungsform ist vorgesehen, dass die Kabel und die Ansaugleitung innerhalb des Füllstandsmessers verlaufen.

Hierdurch ergibt sich eine weitere Vereinfachung des konstruktiven Aufbaus, da der Füllstandsmesser die Ansaugleitung sowie die mindestens zwei Kabel näherungsweise koaxial umschließt. Vor dem Einziehen der elektrischen Versorgungskabel und der Ansaugleitung in den Füllstandsmesser kann es vorteilhaft sein, sowohl die Kabel als auch die Ansaugleitung zumindest abschnittsweise mit einer zusätzlichen Umhüllung zu einem Bündel bzw. einem strangartigen Gebilde zusammenzufassen.

Der Füllstandsmesser verfügt bevorzugt über mindestens eine Belüftung, um Messfehler bei der Ermittlung der Füllstandshöhe zu vermindern. Die Belüftung des Füllstandsmessers ist bevorzugt auf der gleichen Höhe wie die Tankbelüftung oder höher angeordnet.

Eine weitere Ausgestaltung der Vorrichtung sieht vor, dass der Pumpensumpf im Bereich einer Erhebung oder einer Vertiefung des Tankbodens angeordnet ist. Hierdurch kann das Ansaugverhalten, insbesondere bei niedrigen Pegelständen des Reduktionsmittels im Tank, weiter verbessert werden.

### Kurze Beschreibung der Zeichnungen

Anhand der Zeichnung soll die Erfindung nachstehend näher erläutert werden.

Es zeigt:
- Figur 1: Eine schematische Darstellung der Vorrichtung ohne Tank;
- Figur 2: einen schematischen Querschnitt durch den an den Tank angesetzten Pumpensumpf;
- Figur 3: eine stark vereinfachte Draufsicht auf den Tank der Vorrichtung;
- Figur 4: eine schematische Querschnittsdarstellung der Vorrichtung mit teilweise vereistem Tank;
- Figur 5: eine schematische Übersicht der Leitungsführung;
- Figur 6: eine Querschnittsdarstellung durch den Isoliermantel mit dem Füllstandsmesser, der Ansaugleitung sowie den elektrischen Kabeln;
- Figur 7: eine schematische Darstellung des Füllstandsmessers.
- Figur 8: ein elektrisches Ersatzschaltbild des Füllstandsmessers.
- Figur 9,10: zwei alternative Ausführungsformen des Tankbodens.

### Ausführungsformen

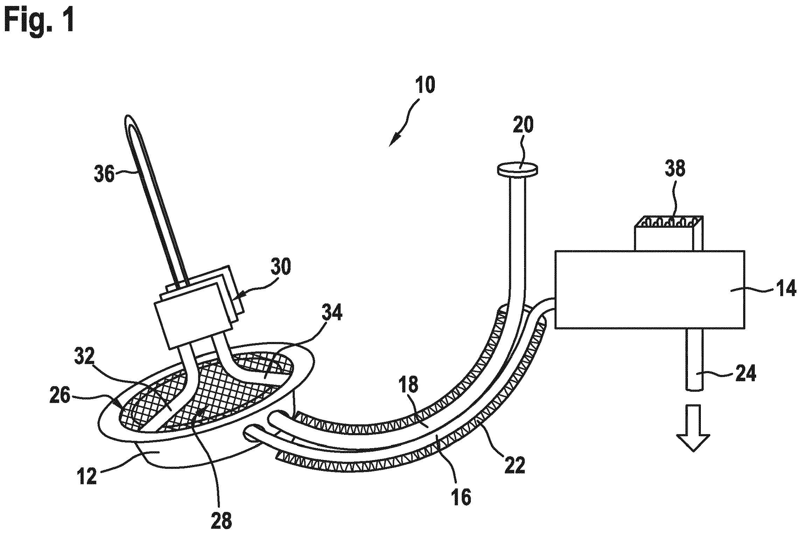

Die Figur 1 zeigt eine schematische Darstellung der erfindungsgemäßen Vorrichtung.

Die Vorrichtung 10 umfasst unter anderem einen näherungsweise topfförmigen Pumpensumpf 12, der mit einem Fördermodul 14 über eine beheizte und eisdruckfeste Ansaugleitung 16 verbunden ist. Abweichend von der exemplarisch gezeigten topfförmigen Formgebung des Pumpensumpfes 12 kann dieser beispielsweise auch die geometrische Gestalt eines innen hohlen Kegelstumpfabschnittes mit einer deutlich schräg gestellten umlaufenden Wandung aufweisen. An den Pumpensumpf 12 ist ein Füllstandsmesser 18 angeschlossen, der an seinem oberen Ende über eine Belüftung 20 verfügt. Zur Minimierung der Wärmeverluste sind sowohl die beheizte Ansaugleitung 16 als auch der Füllstandsmesser 18 vollständig von einem Isoliermantel 22 umgeben. Der Pumpensumpf 12 ist im Bereich einer unterseitigen Tanköffnung eines in der Figur 1 nicht dargestellten Tanks befestigt. Der Tank dient zur Bevorratung des für die Durchführung des SCR-Verfahrens erforderlichen Reduktionsmittels. Als Reduktionsmittel kommt beim SCR-Verfahren üblicherweise das s.g. AdBlue^{®} zum Einsatz, bei dem es sich um eine in etwa 32,5-prozentige Harnstoff-Wasserlösung handelt. Das Reduktionsmittel wird ausgehend vom Pumpensumpf 12 über die Ansaugleitung 16 mithilfe des Fördermoduls 14 aus dem Tank herausgesaugt und über eine hydraulische Anschlussleitung 24 an ein nicht dargestelltes katalytisches Abgasreinigungssystem weitergefördert. Um die notwendige Eisdruckfestigkeit der Vorrichtung 10 zu gewährleisten, ist im Pumpensumpf 12 ein ringförmiges, elastisches Ausgleichselement 26 angeordnet. Das Ausgleichselement 26 ist mit einem elastischen und einem chemisch hinreichend gegen das AdBlue^{®} beständigen Kunststoffmaterial, wie zum Beispiel EPDM, hergestellt. Das Ausgleichselement 26 kann beispielsweise in den Pumpensumpf 12 eingeklebt, eingepresst, eingeklemmt, einvulkanisiert oder auch nur lose eingelegt werden. Infolge des Ausgleichselements 26 werden Ausdehnungsbewegungen des unterhalb von -11 °C gefrierenden Reduktionsmittels im Bereich des Pumpensumpfes 12 durch eine entsprechende Verformung des Ausgleichselements 26 aufgefangen, wodurch die notwendige Eisdruckfestigkeit der Vorrichtung 10 gewährleistet ist. Um zu verhindern, dass Schmutzpartikel und andere Fremdkörper aus dem Tank bis in das Fördermodul 14 und/oder in das nicht dargestellte Abgasreinigungssystem des Verbrennungsmotors hinein gelangen, die zu Verstopfungen und/oder einem Totalausfall des gesamten Abgasreinigungssystems führen könnten, ist ein scheibenförmiges Filterelement 28 vorgesehen, das sich vorzugsweise über die gesamte Querschnittsfläche des Pumpensumpfes 12 hinweg erstreckt. Bei dem Filterelement 28 handelt es sich bevorzugt um ein so genanntes 3D-Filterelement. Der Pumpensumpf 12 stellt sicher, dass im Bereich der Ansaugleitung 16 stets eine ausreichende Menge des Reduktionsmittels ansteht und somit eine weitgehend lageunabhängige Förderung desselben mittels des Fördermoduls 14 möglich ist. Oberhalb des Pumpensumpfes 12 ist ferner eine bevorzugt elektrisch betriebene Pumpensumpfheizung 30 angeordnet, die im gezeigten Ausführungsbeispiel über drei plattenförmige, jeweils gleichmäßig parallel zueinander beabstandet angeordnete Heizelemente verfügt. Die Befestigung der Pumpensumpfheizung 30 erfolgt mit mindestens zwei Haltern 32,34, die über die notwendige Eisdruckfestigkeit verfügen. Oberhalb der Pumpensumpfheizung 30 ist ein Heizstab 36 positioniert, der sich über die gesamte Höhe des Tanks zu einer in Figur 1 gleichfalls nicht dargestellten Tankbelüftung hin erstreckt. Mithilfe der Pumpensumpfheizung 30 ist auch bei zumindest teilweise gefrorenem Reduktionsmittel oberhalb des Pumpensumpfes 12 eine hier nicht dargestellte Kavität durch das Auftauen herstellbar, die mit flüssigem Reduktionsmittel zur Versorgung des Abgasreinigungssystems angefüllt ist. Um auch in diesem Fall eine ausreichende Belüftung des Tanks sicherzustellen, ist mithilfe des Heizstabes 36 ein hier nicht dargestellter Luftkanal im gefrorenen Reduktionsmittel durch partielles Aufschmelzen desselben herstellbar und dauerhaft freihaltbar, der eine durchgehende Verbindung zwischen der Tankbelüftung und der Kavität im Bereich des Pumpensumpfes 12 schafft. Sowohl die Beheizung der Ansaugleitung 16 als auch die Pumpensumpfheizung 30 und der Heizstab 36 sind bevorzugt elektrisch betrieben und werden im Idealfall über lediglich zwei elektrische Versorgungskabel mit Strom gespeist. Zu diesem Zweck sind die erwähnten Heizeinrichtungen elektrisch parallel geschaltet. Das Fördermodul 14 wird ebenfalls vorzugsweise elektrisch betrieben, wobei die Stromversorgung über einen konventionellen Steckanschluss 38 erfolgt.

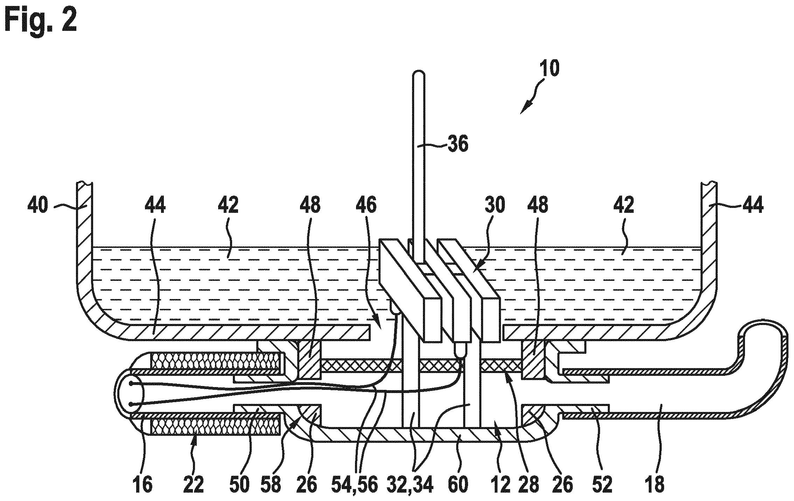

Die Figur 2 zeigt eine schematische Querschnittsdarstellung des Tanks mit angesetztem Pumpensumpf.

Ein Tank 40 als eine weitere Systemkomponente der Vorrichtung 10, der zur Bevorratung des Reduktionsmittels 42 dient, verfügt über einen im Wesentlichen ebenen Tankboden 44. In den Tankboden 44 ist eine kreisförmige Tanköffnung 46 eingebracht. Diese ist von einem umlaufenden Flansch 48 eingefasst, der in vorteilhafter Weise integral zum Tank 40 ausgebildet ist. Der Flansch 48 erleichtert die unterseitige Anbringung des Pumpensumpfes 12 am Tankboden 44, die bevorzugt durch Verschweißen erfolgt. Ein hier der besseren zeichnerischen Übersicht halber nicht mit einer Bezugsziffer versehener Durchmesser der Tanköffnung 46 ist deutlich kleiner gewählt, als ein gleichfalls nicht mit einer Bezugsziffer versehener Innendurchmesser des Pumpensumpfes 12, so dass der Pumpensumpf 12 die Tanköffnung 46 vollständig überdeckt.

Im Ausführungsbeispiel der Figur 2 sind zwei rohrförmige Anschlüsse 50,52 am Pumpensumpf 12 ausgebildet. Am Anschluss 50 ist die Ansaugleitung 16 angeschlossen, die mit dem Fördermodul 14 verbunden ist. Die Ansaugleitung 16, der Füllstandsmesser 18 und/oder die rohrförmigen Anschlüsse 50,52 können mindestens eine Querschnittsverjüngung aufweisen, die die Funktion einer Drossel hat, um unerwünschte Schwappbewegungen im Tank 40 abzudämpfen. Der Anschluss 52 dient zur Anbindung des Füllstandsmessers 18. Die elektrische Versorgung der Pumpensumpfheizung 30 sowie des Heizstabes 36 geschieht mit zwei Kabeln 54,56, die hier exemplarisch durch die Ansaugleitung 16 hindurch verlaufend verlegt sind. Alternativ können die Kabel 54,56 auch außerhalb der Ansaugleitung 16 verlaufen. In einer derartigen Konstellation kann es vorteilhaft sein, die Ansaugleitung 16 und die Kabel 54,56 zumindest abschnittsweise mit einer Umhüllung, zum Beispiel mit einer Kabelspirale, mit Kabelbindern, Klebeband oder dergleichen, zu einem strangförmigen Gebilde zusammenzufassen. Die Ansaugleitung 16 ist durch geeignete Maßnahmen eisdruckfest ausgelegt und verfügt darüber hinaus über eine gleichfalls bevorzugt elektrisch gespeiste Heizeinrichtung, um das Einfrieren des Reduktionsmittels 42 in diesem Bereich zu unterbinden. Die Ansaugleitung 16 mit den darin verlaufenden elektrischen Kabeln 54,56 ist zur Minimierung des Heizenergieverbrauchs vollständig vom Isoliermantel 22 umgeben. Abweichend von der gezeigten Anordnung kann der Füllstandsmesser 18 in vorteilhafter Weise zusammen mit der beheizten Ansaugleitung 16 und den Kabeln 54,56 vom Isoliermantel 22 umhüllt sein. Hierdurch erübrigt sich eine Beheizung des Füllstandsmessers 16 zur Verhinderung des Einfrierens. Die Pumpensumpfheizung 30 ist mittels der beiden Halter 32,34 am Pumpensumpf 12 befestigt. Unterhalb des Flansches 48 befindet sich das im Wesentlichen ringförmige Ausgleichselement 26, das an einer umlaufenden, leicht geneigten Innenwandfläche 58 und einem Boden 60 des Pumpensumpfes 12 anliegt. Unterhalb der Tanköffnung 46 ist das Filterelement 28 positioniert. Die Lagefixierung der Ansaugleitung 16 sowie des schlauchförmigen Füllstandsmessers 18 auf den beiden Anschlüssen 50,52 kann beispielsweise mittels nicht dargestellter Klemmschellen oder dergleichen erfolgen.

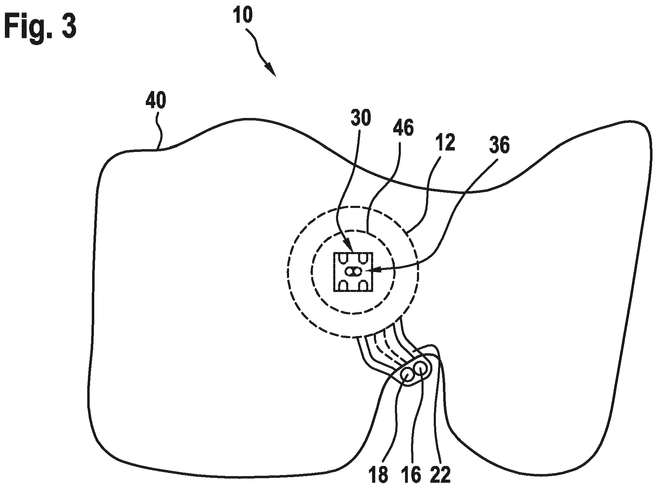

Die Figur 3 illustriert in einer stark vereinfachten Darstellung eine Draufsicht auf die Vorrichtung 10.

Unterhalb des eine komplexe geometrische Gestalt aufweisenden (Freiform-)Tanks 40 befindet sich der die Tanköffnung 46 überdeckende Pumpensumpf 12. Die Pumpensumpfheizung 30 sowie der Heizstab 36 sind mittels der Halter in etwa mittig oberhalb des Pumpensumpfes 12 angeordnet. Ein Durchmesser des Pumpensumpfes 12 ist deutlich größer als ein Durchmesser der Tanköffnung 46, um eine ausreichende Überdeckung und Abdichtungswirkung zu gewährleisten. Im Gegensatz zur Darstellung in Figur 2 sind die Ansaugleitung 16 sowie der Füllstandsmesser 18 hier auf derselben Seite des Pumpensumpfes 12 angeordnet. Darüber hinaus sind sowohl die Ansaugleitung 16 als auch der Füllstandsmesser 18 vom Isoliermantel 22 umhüllt, wodurch sich eine separate Beheizung des Füllstandsmessers erübrigt.

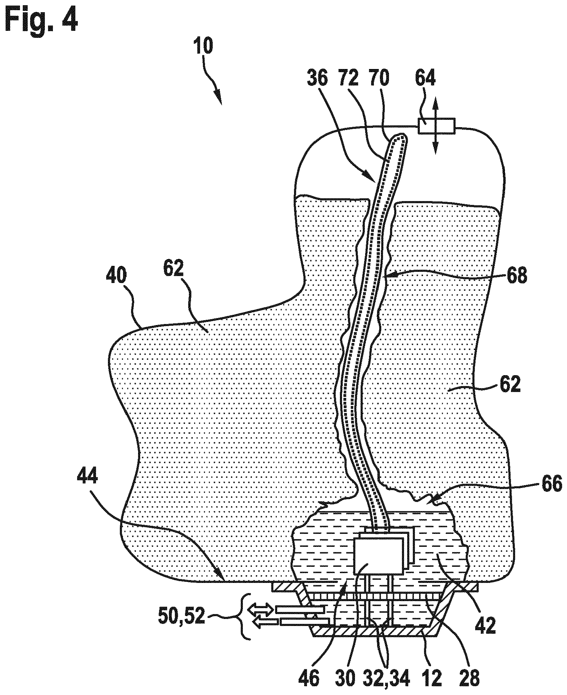

Die Figur 4 zeigt einen Querschnitt durch die Vorrichtung 10 bei nahezu vollständig vereistem Reduktionsmittel.

Der Tank 40 ist aufgrund einer tiefen Umgebungstemperatur überwiegend mit gefrorenem Reduktionsmittel 62 bzw. mit "Eis" angefüllt. Der Tank 40 verfügt über eine oberseitig angeordnete Tankentlüftung 64, um eine ungehinderte Förderung des Reduktionsmittels 42 mithilfe des hier nicht dargestellten Fördermoduls zu ermöglichen. Zu diesem Zweck ermöglicht die Tankentlüftung 64 den Durchtritt von Luft aus der Umgebung in beiden Richtungen, wie durch den schwarzen Doppelpfeil angedeutet. Der Pumpensumpf 12 überdeckt die in den Tankboden 44 eingebrachte Tanköffnung 46. Die Pumpensumpfheizung 30 ist mittels der Halter 32,34 oberhalb des Pumpensumpfes 12 befestigt. Unterhalb der Tanköffnung 46 befindet sich das Filterelement 28. Die beiden Anschlüsse 50,52 für die hier nicht dargestellte Ansaugleitung und den Füllstandsmesser sind seitlich aus dem Pumpensumpf 12 herausgeführt. Mithilfe der elektrisch betriebenen Pumpensumpfheizung 30 lässt sich eine Kavität 66 in das gefrorene Reduktionsmittel 62 einschmelzen und eisfrei halten, wobei die Kavität 66 nahezu vollständig mit dem in dieser Zone wieder verflüssigten Reduktionsmittel 42 angefüllt ist. Die Verflüssigung im Bereich des Pumpensumpfes 12 sowie der Kavität 66 erfolgt vorrangig durch die Wirkung der Pumpensumpfheizung 30. Hierdurch steht das im flüssigen Aggregatzustand befindliche Reduktionsmittel 42 weitgehend unabhängig von der Umgebungstemperatur und der räumlichen Lage der Vorrichtung 10 im Bereich der Anschlüsse 50,52 stets in ausreichender Menge zum gleichmäßigen Ansaugen zur Verfügung. Oberhalb der Pumpensumpfheizung 30 befindet sich der elektrisch betriebene Heizstab 36, der sich näherungsweise über eine Gesamthöhe des Tanks 40 bis hinauf zur Tankbelüftung 64 erstreckt. Der Heizstab 36 setzt dem Eiswachstum im Tank 40 keinen nennenswerten mechanischen Widerstand entgegen und wird somit auch im Fall einer vollständigen Vereisung des Reduktionsmittels 42 nicht zerstört. Mithilfe des Heizstabes 36 lässt sich ein Belüftungskanal 68 im gefrorenen Reduktionsmittel 62 schmelzen und auch dauerhaft frei halten. Der Belüftungskanal 68, der den Heizstab 36 allseitig umgibt, ermöglicht einen freien Luftaustausch zwischen der Tankbelüftung 64 und der Kavität 66, so dass beim Ansaugen des noch flüssigen Reduktionsmittels 42 mithilfe des Fördermoduls kein Unterdruck im Tank 40 entsteht und eine ungehinderte Förderung des Reduktionsmittels 42 mithilfe des Fördermoduls möglich ist. Der Heizstab 36 enthält eine umlaufende Heizschlaufe 70, die mit einer geeigneten, ausreichend widerstandsbehafteten Metalllegierung gebildet ist. Die Heizschlaufe 70 ist mit einem Heizstabmantel 72 versehen bzw. beschichtet, der mit einem gegen das Reduktionsmittel bzw. das AdBlue^{®} beständigen Kunststoffmaterial gebildet ist.

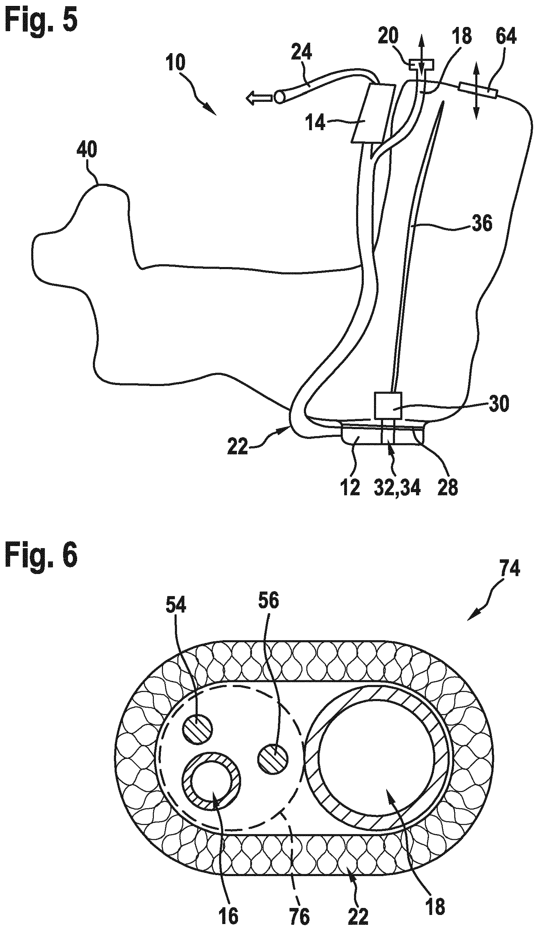

Die Figur 5 veranschaulicht in einer schematischen Übersichtsdarstellung die Leitungsführung der Vorrichtung 10.

Oberseitig am freigeformten Tank 40 befindet sich die Tankbelüftung 64 sowie die Belüftung 20 des Füllstandsmessers 18. Von dem Fördermodul 14 geht die hydraulische Anschlussleitung 24 ab, die zur Versorgung des nicht dargestellten Abgasnachbehandlungssystems mit dem Reduktionsmittel dient. Im Bereich eines nicht bezeichneten tiefsten Punktes des Tanks 40 befindet sich der Pumpensumpf 12 mit der Pumpensumpfheizung 30 sowie dem Heizstab 36. Im Pumpensumpf 12 sind ferner die beiden Halter 32,34 zur Lagesicherung der Pumpensumpfheizung 30 und des Heizstabes 36 befestigt. Quer zu den Haltern 32,34 ist das Filterelement 28 positioniert. Innerhalb des Isoliermantels 22 sind der teilweise sichtbare Füllstandsmesser 18 und die vollständig vom Isoliermantel 22 verdeckte Ansaugleitung 16 sowie die Kabel zur elektrischen Versorgung der Pumpensumpfheizung 30 und des Heizstabes 36 verlegt. Der außenseitig am Tank 40 verlaufende Isoliermantel 22 bzw. die darin verlaufende Ansaugleitung 16, der Füllstandsmesser 18 sowie die elektrischen Kabel 54,56 verbinden den Pumpensumpf 12 mit dem Fördermodul 14 bzw. der Belüftung 20 des Füllstandsmessers 18.

Die Figur 6 zeigt eine vereinfachte Querschnittsdarstellung durch den Isoliermantel mit dem Füllstandsmesser, der Ansaugleitung sowie den elektrischen Kabeln.

Der Isoliermantel 22 umhüllt den Füllstandmesser 18, die beiden elektrischen Kabel 54,56 sowie die Ansaugleitung 16 für das Reduktionsmittel 42 und bildet im Ergebnis einen kompakten Anschlussstrang 74 bzw. einen "Kabel-Schlauchbaum" mit einer näherungsweise ovalen Querschnittsgeometrie, der die alleinige Verbindung zwischen dem Pumpensumpf und dem Fördermodul 14 der Vorrichtung darstellt. Hierdurch wird eine leichtere Handhabung und ein einfacherer Einbau und/oder Austausch der Vorrichtung in einem Kraftfahrzeug erreicht. Der Anschlussstrang 74 erlaubt darüber hinaus das Fördern des Reduktionsmittels 42 aus dem Tank und zugleich eine exakte und weitgehend von der Lage des Tanks unabhängige Messung der Füllhöhe (Pegel) des Reduktionsmittels 42 mithilfe des in den Anschlussstrang 74 integrierten Füllstandsmessers 18. Zur Erleichterung der Montage des Anschlussstrangs 74 können die beiden elektrischen Kabel 54,56 sowie die Ansaugleitung 16 zumindest abschnittsweise mit einer Ummantelung 76 versehen sein. Diese optionale Ummantelung 76 braucht weder elektrisch isolierend noch gegenüber dem Reduktionsmittel 42 chemisch resistent zu sein und kann beispielsweise mit einer konventionellen Kabelspirale, mit Kabelbindern, mit Klebeband oder dergleichen hergestellt sein. Abweichend von dem in Figur 6 gezeigten Aufbau können die beiden elektrischen Leitungen 54,56 sowie die Ansaugleitung 16 auch näherungsweise koaxial innerhalb des Füllstandsmessers 18 selbst verlegt sein, wobei ein Durchmesser des Füllstandsmessers 18 hinreichend groß gewählt werden muss. In einer solchen Konstellation ergibt sich eine näherungsweise kreisförmige Querschnittsgeometrie des Anschlussstrangs 74.

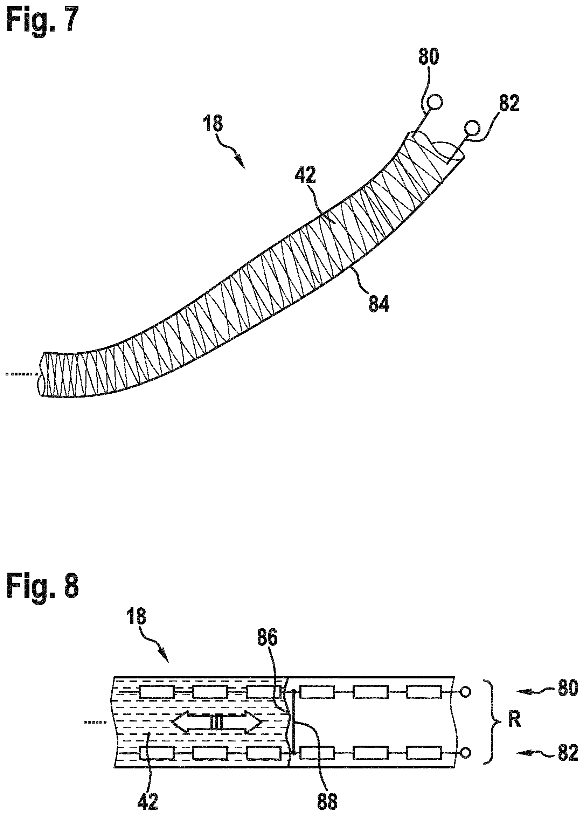

Die Figur 7 zeigt in einer schematischen Darstellung einen möglichen Aufbau des Füllstandsmessers 18.

Der schlauchartige Füllstandsmesser 18 ist mit zwei zum Beispiel spiralförmig gewendelten Widerstandsdrähten 80,82 gebildet, die von einem mit einer elektrisch isolierenden Kunststoffmasse gebildeten Kunststoffmantel 84 außenseitig bedeckt sind. Die Widerstandsdrähte 80,82 sind nur teilweise in den äußeren Kunststoffmantel 84 eingebettet. Hierdurch kann das im Füllstandsmesser 18 befindliche Reduktionsmittel 42, das über eine begrenzte elektrische Leitfähigkeit verfügt, in einen direkten elektrischen Kontakt mit den im Bereich einer nicht bezeichneten Innenfläche des Füllstandsmessers 18 (oberflächlich) freiliegenden Widerstandsdrähten 80,82 treten. Zugleich hat der Kunststoffmantel 84 die Aufgabe, die beiden Widerstandsdrähte 80,82 voneinander elektrisch zu isolieren. Da sowohl die Widerstandsdrähte 80,82 als auch der Kunststoffmantel 84 unmittelbar mit dem Reduktionsmittel 42 in Kontakt treten, müssen die genannten Komponenten über eine ausreichende chemische Beständigkeit und Korrosionsfestigkeit verfügen. Die Wirkungsweise des Füllstandsmessers 18 soll im Weiteren anhand des in Figur 8 dargestellten elektrischen Ersatzschaltbildes näher erläutert werden. Jeder Widerstandsdraht 80,82 kann durch eine Reihenschaltung bzw. eine Widerstandskette einer Vielzahl von Einzelwiderständen elektrisch nachgebildet werden. Im gezeigten Ersatzschaltbild hat das Reduktionsmittel eine Füllhöhe 86, die einen elektrischen Kurzschluss 88 zwischen den beiden Widerstandsketten hervorruft. Ändert sich die Füllhöhe 86 des Reduktionsmittels 42 innerhalb des Füllstandsmessers 18, wie durch den weißen Doppelpfeil angedeutet, so verändert sich auch der zwischen den beiden nicht bezeichneten Anschlussklemmen messbare ohmsche Widerstand R der Gesamtanordnung. Somit ist jeder Füllhöhe 86 ein messbarer ohmscher Widerstandswert zu zuordnen, der zum Beispiel mithilfe einer nicht dargestellten mikrocontrollergestützten Steuer- und/oder Regeleinrichtung messbar, auswertbar und zur Anzeige bringbar ist. Beträgt der gemessene Widerstand R etwa 0 Ohm, so ist die maximal mögliche Füllhöhe 86 erreicht, wohingegen ein Widerstand R von ∞ (unendlich) Ohm für einen totalen Reduktionsmittelverlust (leerer Tank) bzw. einen Leitungsbruch spricht. Die zwischen den nicht näher bezeichneten Anschlussklemmen des Füllstandsmessers 18 abgreifbaren Widerstandswerte R können durch eine geeignete Kalibrierung mittels der mikrocontrollergestützten Steuer- und/oder Regeleinrichtung in einen absoluten Füllstandspegel bzw. eine absolute Volumenangabe der im Tank befindlichen restlichen Reduktionsmittelmenge umgerechnet werden. Mögliche Schwappbewegungen im Tank aufgrund von dynamischen Bewegungen des Kraftfahrzeugs werden durch eine nicht dargestellte Verjüngung bzw. Drossel zwischen dem Füllstandsmesser und dem angesetzten Pumpensumpf abgeschwächt. Die Drossel kann integraler Bestandteil des Füllstandsmessers 18 sein. Etwaige statische Schräglagen des Kraftfahrzeugs können entweder mithilfe eines geeigneten 3D-Lagesensors erfasst und anschließend numerisch aus dem Messergebnis herausgerechnet werden, über eine Tiefpassfilterung des Messsignals eliminiert oder durch eine Anordnung des Füllstandsmessers in der Nähe des Tankschwerpunkts berücksichtigt werden.

Schnelle zeitliche Änderungen des Widerstandswertes können darüber hinaus auf eine Undichtigkeit des Füllstandsmessers 18 hin deuten. Aus den Messergebnissen des Füllstandsmessers 18 kann mithilfe der Steuer- und/oder Regeleinrichtung zumindest ein einfaches Warnsignal für den Fahrer eines Kraftfahrzeuges abgeleitet werden, das auf einen geringen Füllstand des Reduktionsmittels 42 im Tank hinweist und zum baldigen Nachfüllen auffordert.

Aufgrund der recht hohen elektrischen Leitfähigkeit des Reduktionsmittels 42 darf eine Stromstärke des durch den Füllstandsmesser 18 hindurchfließenden (Messgleich-)Stroms nicht zu groß sein, da ansonsten eine elektrolytische Zersetzung des Reduktionsmittels 42 eintreten kann, die zudem zu einer Wasserstoffgasbildung führen kann. Um diese unerwünschten Effekte zu minimieren, kann anstelle von Gleichstrom in vorteilhafter Weise ein (Mess-)Wechselstrom geringer Stromstärke zur Ermittlung der Füllhöhe im Tank 40 mithilfe des Füllstandsmessers 18 eingesetzt werden. Die beiden Widerstandsdrähte 80,82 sind zur Auswertung der Widerstandswerte über mindestens zwei, hier nicht dargestellte, Messkabel bzw. Messleitungen mit der mikrocontrollergestützten Steuer-und/oder Regeleinrichtung verbunden. Die Steuer- und/oder Regeleinrichtung kann ein integraler Bestandteil des Fördermoduls sein, um einen möglichst räumlich kompakten Gesamtaufbau der Vorrichtung zu erzielen.

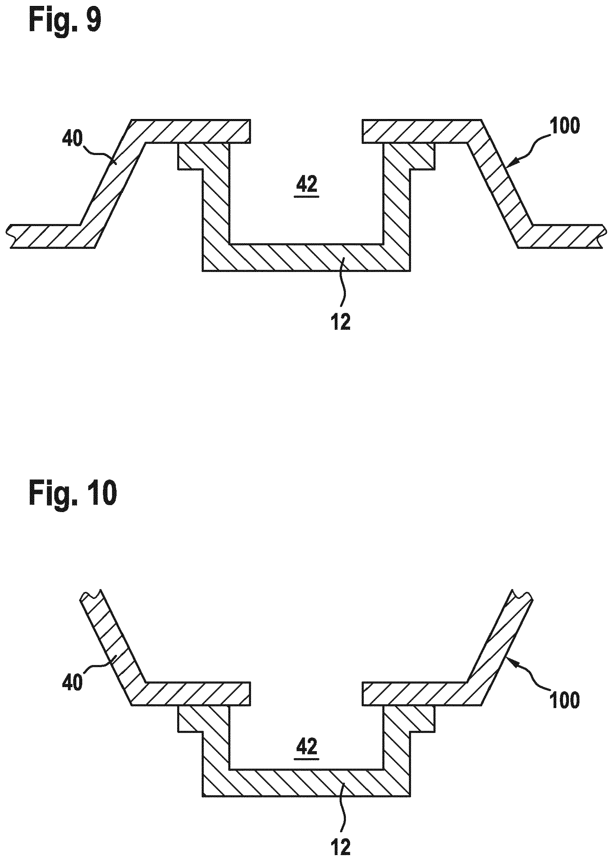

Die Figur 9 sowie die Figur 10, auf die im weiteren Fortgang der Beschreibung gleichzeitig Bezug genommen wird, zeigen zwei alternative Ausführungsformen des Tankbodens des Tanks 40 in einer Querschnittsdarstellung.

Im Unterschied zur Ausgestaltung des Tankbodens nach Maßgabe der Figuren 1 bis 7, ist in den hier nicht bezeichneten Tankboden des Tanks 40 gemäß Figur 9 eine sickenartige Erhebung 100 mit einer näherungsweise trapezförmigen Querschnittsgeometrie ausgebildet, unterhalb derer der Pumpensumpf 12 befestigt ist. Aufgrund der Erhebung 100 kann der Pumpensumpf 12 sukzessive durch Schwapp- bzw. Kippbewegungen des Reduktionsmittels 42 im Tank 40 mit diesem befüllt werden, so dass im Pumpensumpf 12 unter allen Betriebsbedingungen des Kraftfahrzeuges eine ausreichende Menge des Reduktionsmittels 42 zum gleichmäßigen Ansaugen durch das Fördermodul zur Verfügung steht. Im Fall der zweiten alternativen Ausführungsform des nicht bezeichneten Tankbodens gemäß der Figur 10 ist in diesen eine wannenförmige Vertiefung 102 eingebracht, wodurch das Ansaugverhalten der Vorrichtung gegenüber Schräglagen des Tanks durch eine Minimierung des für das Reduktionsmittel 42 "nicht nutzbaren Volumens" optimiert wird. Hierbei weist die Vertiefung 102 gleichfalls eine trapezförmige Querschnittsgeometrie auf. Darüber hinaus können sowohl die Erhebung 100 als auch die Vertiefung 102 eine von der Darstellung in den Figuren 9,10 abweichende Querschnittsgeometrie aufweisen.

Zusammenfassend ermöglicht die erfindungsgemäße Vorrichtung eine weitgehend lage- und temperaturunabhängige Versorgung eines Abgasnachbehandlungssystems eines Dieselmotors mit dem für die Durchführung des SCR-Verfahrens unabdingbaren Reduktionsmittels. Hierdurch wird eine von den Betriebsbedingungen des Kraftfahrzeugs nahezu vollkommen unabhängige und jederzeit ordnungsgemäße Funktion des Abgasnachbehandlungssystems sichergestellt. Darüber hinaus ermöglicht die Vorrichtung eine präzise und gleichfalls weitgehend lageunabhängige Ermittlung des Reduktionsmittelpegels im Vorratstank.

## Patentansprüche

1. Vorrichtung (10) zur Versorgung eines Abgasnachbehandlungssystems mit einem Reduktionsmittel (42), insbesondere mit einer Harnstoff-Wasserlösung zur Reduktion von Stickoxiden im Abgasstrom eines Dieselmotors, mit einem Tank (40) für das Reduktionsmittel (42) und mit einem Fördermodul (14) zum Herausfördern des Reduktionsmittels (42) aus dem Tank (40) über eine, insbesondere elektrisch beheizbare, Ansaugleitung (16), welche außerhalb des Tanks (40) verläuft und an einen im Bereich eines Tankbodens (44) befindlichen Pumpensumpf (12) angeschlossen ist, wobei im Bereich des Pumpensumpfes (12) eine, insbesondere elektrisch betriebene, Pumpensumpfheizung (30) angeordnet ist, **dadurch gekennzeichnet, dass**
a) mindestens ein, insbesondere elektrisch betriebener, Heizstab (36) in den Tank (40) hineinreicht, wobei der Heizstab (36) sich zwischen der oberseitig am Tank (40) befindlichen Tankbelüftung (64) und dem Pumpensumpf (12) erstreckt und
b) mindestens ein Füllstandsmesser (18) außerhalb des Tanks (40) zwischen der Oberseite des Tanks (40) und dem Pumpensumpf (12) verläuft, wobei der Pegel des Reduktionsmittels (42) im Füllstandmesser (18) aufgrund des Prinzips der kommunizierenden Röhren stets mit der Füllhöhe des Reduktionsmittels (42) im Tank (40) korrespondiert.

2. Vorrichtung (10) nach Anspruch 1, wobei der Pumpensumpf (12) eine Tanköffnung (46) überdeckt und der Tank (40) mindestens eine Tankbelüftung (64) aufweist.

3. Vorrichtung (10) nach Anspruch 1 oder 2, wobei mindestens ein Ausgleichselement (26) im Pumpensumpf (12) positioniert ist.

4. Vorrichtung (10) nach einem der Ansprüche 1 bis 3, wobei im Bereich des Pumpensumpfes (12) mindestens ein Filterelement (28) angeordnet ist.

5. Vorrichtung (10) nach einem der Ansprüche 1 bis 4, wobei der Füllstandsmesser (18) mit mindestens zwei Widerstandsdrähten (80,82) gebildet ist, die mit einem Kunststoffmantel (84) versehen sind und die mit dem Reduktionsmittel (42) in elektrisch leitenden Kontakt treten können.

6. Vorrichtung (10) nach einem der Ansprüche 1 bis 5, wobei mindestens zwei Kabel (54,56), insbesondere zur Versorgung der elektrisch beheizbaren Ansaugleitung (16), der Pumpensumpfheizung (30) und des Heizstabes (36), im Wesentlichen entlang der Ansaugleitung (16) verlaufen.

7. Vorrichtung (10) nach einem der Ansprüche 1 bis 6, wobei der Füllstandsmesser (18) und die Ansaugleitung (16) sowie die mindestens zwei Kabel (54,56) zumindest abschnittsweise von einem thermischen Isoliermantel (22) umgeben sind.

8. Vorrichtung (10) nach Anspruch 7, wobei die mindestens zwei Kabel (54,56) sowie die Ansaugleitung (16) innerhalb des Füllstandsmessers (18) verlaufen.

9. Vorrichtung (10) nach einem der Ansprüche 1 bis 8, wobei der Füllstandsmesser (18) mindestens eine Belüftung (20) aufweist.

10. Vorrichtung (10) nach einem der Ansprüche 1 bis 9, wobei der Pumpensumpf (12) im Bereich einer Erhebung (100) oder einer Vertiefung (102) des Tankbodens (44) angeordnet ist.

## Claims

1. Device (10) for supplying a reducing agent (42), in particular a urea-water solution for the reduction of nitrogen oxides in the exhaust-gas flow of a diesel engine, to an exhaust-gas aftertreatment system, having a tank (40) for the reducing agent (42) and having a delivery module (14) for conveying the reducing agent (42) out of the tank (40) via an in particular electrically heatable suctioning line (16) which runs outside the tank (40) and is connected to a pump sump (12) situated in the region of a tank base (44), wherein an in particular electrically operated pump sump heater (30) is arranged in the region of the pump sump (12), **characterized in that**
a) at least one, in particular electrically operated heating bar (36) extends into the tank (40), wherein the heating bar (36) extends between the tank vent (64), which is situated on the top side of the tank (40), and the pump sump (12), and
b) at least one fill level sensor (18) runs outside the tank (40) between the top side of the tank (40) and the pump sump (12), wherein the level of the reducing agent (42) in the fill level sensor (18) always corresponds, based on the principle of communicating pipes, to the fill level of the reducing agent (42) in the tank (40).

2. Device (10) according to Claim 1, wherein the pump sump (12) covers a tank opening (46), and the tank (40) has at least one tank vent (64).

3. Device (10) according to Claim 1 or 2, wherein at least one compensating element (26) is positioned in the pump sump (12).

4. Device (10) according to one of Claims 1 to 3, wherein at least one filter element (28) is arranged in the region of the pump sump (12).

5. Device (10) according to one of Claims 1 to 4, wherein the fill level sensor (18) is formed with at least two resistance wires (80, 82) which are provided with a plastics sheathing (84) and which can come into electrically conductive contact with the reducing agent (42).

6. Device (10) according to one of Claims 1 to 5, wherein at least two cables (54, 56), in particular for a supply to the electrically heatable suctioning line (16), to the pump sump heater (30) and to the heating bar (36), run substantially along the suctioning line (16).

7. Device (10) according to one of Claims 1 to 6, wherein the fill level sensor (18) and the suctioning line (16) and the at least two cables (54, 56) are surrounded at least in portions by a thermal insulation sheathing (22).

8. Device (10) according to Claim 7, wherein the at least two cables (54, 56) and the suctioning line (16) run within the fill level sensor (18).

9. Device (10) according to one of Claims 1 to 8, wherein the fill level sensor (18) has at least one vent (20).

10. Device (10) according to one of Claims 1 to 9, wherein the pump sump (12) is arranged in the region of an elevation (100) or of a depression (102) of the tank base (44).

## Revendications

1. Dispositif (10) pour l'alimentation d'un système de retraitement du gaz d'échappement avec un agent de réduction (42), en particulier avec une solution aqueuse d'urée pour la réduction d'oxydes d'azote dans le courant de gaz d'échappement d'un moteur diesel, avec un réservoir (40) pour l'agent de réduction (42) et avec un module de transport (14) pour extraire l'agent de réduction (42) hors du réservoir (40) au moyen d'une conduite d'aspiration (16), qui peut en particulier être chauffée électriquement, qui s'étend à l'extérieur du réservoir (40) et qui est raccordée à un bassin de pompe (12) se trouvant dans la région d'un fond de réservoir (44), dans lequel un chauffage du bassin de pompe (30), fonctionnant en particulier à l'électricité, est disposé dans la région du bassin de pompe (12), **caractérisé en ce que**
a) au moins un barreau chauffant (36), fonctionnant en particulier à l'électricité, pénètre dans le réservoir (40), dans lequel le barreau chauffant (36) s'étend entre l'aération du réservoir (64) se trouvant sur le côté supérieur du réservoir (40) et le bassin de pompe (12) et
b) au moins un indicateur de niveau (18) s'étend à l'extérieur du réservoir (40) entre le côté supérieur du réservoir (40) et le bassin de pompe (12), dans lequel le niveau de l'agent de réduction (42) dans l'indicateur de niveau (18) correspond toujours à la hauteur de remplissage de l'agent de réduction (42) dans le réservoir (40) en vertu du principe des tubes communicants.

2. Dispositif (10) selon la revendication 1, dans lequel le bassin de pompe (12) recouvre une ouverture de réservoir (46) et le réservoir (40) présente au moins une aération de réservoir (64).

3. Dispositif (10) selon la revendication 1 ou 2, dans lequel au moins un élément d'équilibrage (26) est positionné dans le bassin de pompe (12).

4. Dispositif (10) selon l'une quelconque des revendications 1 à 3, dans lequel au moins un élément de filtre (28) est disposé dans la région du bassin de pompe (12).

5. Dispositif (10) selon l'une quelconque des revendications 1 à 4, dans lequel l'indicateur de niveau (18) est formé avec au moins deux fils de résistance (80, 82), qui sont munis d'une gaine en matière plastique (84) et qui peuvent venir en contact électrique conducteur avec l'agent de réduction (42).

6. Dispositif (10) selon l'une quelconque des revendications 1 à 5, dans lequel au moins deux câbles (54, 56), en particulier pour l'alimentation de la conduite d'aspiration à chauffage électrique (16), du chauffage du bassin de pompe (30) et du barreau chauffant (36), courent essentiellement le long de la conduite d'aspiration (16).

7. Dispositif (10) selon l'une quelconque des revendications 1 à 6, dans lequel l'indicateur de niveau (18) et la conduite d'aspiration (16) ainsi que lesdits au moins deux câbles (54, 56) sont entourés au moins en partie par une gaine thermiquement isolante (22).

8. Dispositif (10) selon la revendication 7, dans lequel lesdits au moins deux câbles (54, 56) ainsi que la conduite d'aspiration (16) courent à l'intérieur de l'indicateur de niveau (18).

9. Dispositif (10) selon l'une quelconque des revendications 1 à 8, dans lequel l'indicateur de niveau (18) présente au moins une aération (20).

10. Dispositif (10) selon l'une quelconque des revendications 1 à 9, dans lequel le bassin de pompe (12) est disposé dans la région d'une élévation (100) ou d'un creux (102) du fond de réservoir (44).
